# EUROPEAN PATENT SPECIFICATION

(11) **EP 4 097 149 B1**
(45) Date of publication and mention of the grant of the patent: **31.05.2023**
(21) Application number: 21712185.4
(22) Date of filing: 19.03.2021
(51) Int. Cl.: C08F 2/01, C08F 2/14, C08F 6/24, C08F 210/16

(54) **SUSPENSION PROCESS FOR PREPARING ETHYLENE POLYMERS COMPRISING WORKUP OF THE SUSPENSION MEDIUM**
SUSPENSIONSVERFAHREN ZUR HERSTELLUNG VON ETHYLENPOLYMEREN MIT TROCKNUNG DER POLYMERPARTIKEL
PROCÉDÉ DE SUSPENSION POUR LA PRÉPARATION DE POLYMÈRES D'ÉTHYLÈNE COMPRENANT LE SÉCHAGE DE PARTICULES DE POLYMÈRES

(30) Priority: 24.03.2020 EP 20165161
(43) Date of publication of application: 07.12.2022
(73) Proprietor: Basell Polyolefine GmbH, 50389 Wesseling (DE)
(72) Inventor: KUEHL, Reinhard, 53332 Bornheim (DE); DOLLE, Volker, 64625 Bensheim (DE); ROHRBACH, Peter, 65719 Hofheim /Ts. (DE); DAMM, Elke, 61118 Bad Vilbel (DE)
(74) Representative: LyondellBasell
(86) International application number: PCT/EP2021/057088
(87) International publication number: WO 2021/191076

(56) References cited:
- WO-A1-2018/046169
- WO-A1-2018/234350
- US-B1- 6 204 345

## Description

### FIELD OF THE INVENTION

The present disclosure provides a process for preparing an ethylene polymer in a suspension polymerization in a polymerization reactor or a series of polymerization reactors. The present disclosure provides in particular a process for preparing an ethylene polymer in a suspension polymerization in a polymerization reactor or a series of polymerization reactors in which the obtained suspension of ethylene polymer particles in a suspension medium is transferred into a solid-liquid separator, in which the suspension is separated in ethylene polymer particles and mother liquor and a part of the mother liquor is transferred into a work-up section comprising an evaporation unit.

### BACKGROUND OF THE INVENTION

Suspension processes for preparing ethylene polymers are established methods for producing ethylene polymers and, for example, disclosed in EP 0 905 152 A1 or WO 2012/028591 A1. Such processes are often carried out in a series of reactors and so allow to set different reaction conditions in the polymerization reactors and thereby to produce different polymer compositions in the individual polymerization reactors. Accordingly produced multimodal ethylene copolymers are characterized by having, for example, a good combination of product properties and processability. Suspension processes for preparing ethylene polymers commonly employ a hydrocarbon or a hydrocarbon mixture as diluent. The suspension medium, which forms the liquid or supercritical phase of the suspension, comprises, besides the diluent as main component, also further components like dissolved ethylene, comonomers, aluminum alkyls, and hydrogen and dissolved reaction products like oligomers and waxes. Principles of producing multi- modal ethylene copolymer in suspension in a series of reactors are, e.g., disclosed in F. Alt et al., Macromol. Symp. 2001, 163, 135-143.

For economic and ecological reasons, it is common practice to recycle not consumed components of the reaction mixture like the diluent or non-polymerized monomers or comonomers to the polymerization process. The separation of the produced polyethylene particles from the formed suspension results in ethylene polymer particles and separated suspension medium, the so-called mother liquor. The polymer particles are usually wet and subsequently dried in a powder dryer, for example using a hot gas stream such as a hot nitrogen stream. The hydrocarbons contained in the hot gas stream may thereafter be separated from the hot gas stream and transferred into a liquid hydrocarbon recover stream, which is returned to the polymerization.

The mother liquor can directly be recycled to the polymerization process. However, to remove side products of the polymerization reaction which are soluble in the suspension medium from the polymerization process, a part of the mother liquor has to be worked up. Another reason for working up the mother liquor can be that the suspension obtained after the final reactor of a series of polymerization reactors may contain components which should not be introduced into one of the previous polymerization reactors for producing polyethylenes with specific property combinations. For example, for preparing multimodal ethylene copolymers having a high ESCR, it is often needed that one of the polymerizations in one of the polymerization reactors is an ethylene homopolymerization and accordingly no comonomer should be present in the respective polymerization reactor.

The mother liquor to be worked up is a multi-component mixture. Accordingly, various separation steps such as evaporation or distillation steps are needed to remove all unwanted components and to split up those constituents which are intended to be recycled to the polymerization process. For example, WO 2010/136202 A1 discloses a process in which a part of the mother liquor is evaporated. The heavy ends of this pre-distillation are fed to a wax removal unit in which the wax-rich hydrocarbon flow is concentrated to polyethylene wax. The overhead stream of the pre-distillation, for example wax-depleted diluent, is distilled in a diluent distillation column. Finally, the diluent is purified in adsorbers and fed back into the process.

For carrying out the evaporation and/or distillation steps in the work-up of the mother liquor, it is needed to heat the mother liquor. This generally occurs in heat exchangers. It has however been found that heating the mother liquor in a heat exchanger results in significant fouling within the heat exchanger. This means, deposits are formed on the surface of the heat exchangers and their heat exchange efficiency decreases. As a consequence, frequent cleaning of the heat exchangers is needed resulting in costly downtime of the polymerization system.

Accordingly, there is a need to provide a process for working up the mother liquor which is obtained by removing the prepared ethylene polymer particles from the produced suspension in an ethylene polymerization process, which mother liquor work-up process allows to obtain purified diluent in an economical and energy efficient manner, which however prevents or at least significantly reduces fouling in heat exchangers for heating the mother liquor and so removes the necessity of frequently interrupting the polymerization process in order to clean these heat exchangers.

### SUMMARY OF THE INVENTION

The present disclosure provides a process for preparing an ethylene polymer in a suspension polymerization in a polymerization reactor or a series of polymerization reactors comprising
polymerizing ethylene or copolymerizing ethylene and one or more C₃-C₁₂-1-alkenes at temperatures of from 40 to 150°C and pressures of from 0.1 to 20 MPa in the presence of a polymerization catalyst and forming a suspension of ethylene polymer particles in a suspension medium comprising a hydrocarbon diluent,
transferring the suspension of ethylene polymer particles into a solid-liquid separator, in which the suspension is separated in ethylene polymer particles and mother liquor,
transferring a part of the mother liquor into a work-up section comprising an evaporation unit for producing a wax-depleted portion of the mother liquor, wherein a protic agent is added to the part of the mother liquor which is transferred into the work-up section, and
recycling at least a part of the wax-depleted portion of the mother liquor to the polymerization reactor or the series of polymerization reactors.

In some embodiments, the protic agent is water, an alcohol, an acid or a mixture thereof.

In some embodiments, the protic agent is water and the water is added in liquid form, as steam or as aqueous solution of an organic or inorganic compound.

In some embodiments, the mixture of mother liquor and added protic agent to be transferred into the work-up section passes a mixing device before entering the work-up section.

In some embodiments, the mixing device is an inline mixer, a jet mixer, mixing nozzles, a hydrocyclone, a vessel equipped with a mixing element, a rotor/stator mixer or a homogenizer or an emulsifier.

In some embodiments, a heat exchanger operating as pre-heater is installed upstream of the evaporation unit and the mixture of mother liquor and added protic agent transferred into the work-up section is passed through this heat exchanger before entering the evaporation unit.

In some embodiments, the evaporation unit is a circulating evaporation unit comprising a heat exchanger and a separation vessel and the circulating evaporation unit is operated by feeding the liquid phase to be evaporated into the heat exchanger, partly vaporizing the liquid phase in the heat exchanger, and returning the resulting liquid and vapor mixture to the separation vessel.

In some embodiments, the wax-depleted portion of the mother liquor produced in the evaporation unit is further subjected to a distillation process before being recycled to the polymerization reactor or the series of polymerization reactors.

In some embodiments, a wax containing part of the mother liquor depleted in lower boiling point components is withdrawn from the evaporation unit and transferred to a wax removal unit which is operated by direct steam distillation.

In some embodiments, wax removal unit produces a gaseous hydrocarbon/steam mixture which is condensed and then separated, within a liquid-liquid separator, into an aqueous phase and a hydrocarbon phase and the hydrocarbon phase is recycled to the evaporation unit.

In some embodiments, the prepared ethylene polymer is a multimodal ethylene copolymer.

In some embodiments, the preparation of the ethylene polymer is carried out in a series of polymerization reactors and an ethylene homopolymer is prepared in one of the polymerization reactors.

In some embodiments, the ethylene homopolymer is prepared in the first polymerization reactor of the series of polymerization reactors and a copolymer of ethylene is prepared in a subsequent polymerization reactor.

### BRIEF DESCRIPTION OF THE DRAWINGS

Figure 1 shows schematically a set-up for preparing ethylene polymers in suspension according to the process of the present disclosure.
Figure 2 shows schematically a further set-up for preparing ethylene polymers in suspension according to the process of the present disclosure.

### DETAILED DESCRIPTION OF THE INVENTION

The present disclosure provides a process for preparing an ethylene polymer in a suspension polymerization in a polymerization reactor or in a series of polymerization reactors. The ethylene polymers are prepared by polymerizing ethylene or copolymerizing ethylene and one or more C₃-C₁₂-1-alkenes in the presence of a polymerization catalyst. The C₃-C₁₂-1-alkenes may be linear or branched. Preferred C₃-C₁₂-1-alkenes are linear C₃-C₁₀-1-alkenes such as propylene, 1-butene, 1-pentene, 1-hexene, 1-heptene, 1-octene, or 1-decene or branched C₂-C₁₀-1-alkenes such as 4-methyl-1-penten. It is also possible to polymerize ethylene with mixtures of two or more C₃-C₁₂-1-alkenes. Preferred comonomers are C₃-C₈-1-alkenes, in particular 1-butene, 1-pentene, 1-hexene, 1-heptene and/or 1-octene. In prepared ethylene copolymers, the amount of units which are derived from incorporated comonomers is preferably from 0.01 wt.% to 25 wt.%, more preferably from 0.05 wt.% to 15 wt.% and in particular from 0.1 wt.% to 12 wt.%. Particular preference is given to processes in which ethylene is copolymerized with from 0.1 wt.% to 12 wt.% of 1-hexene and/or 1-butene and especially from 0.1 wt.% to 12 wt.% of 1-butene.

The polymerization can be carried out using all customary olefin polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type, preferably comprising a compound of titanium or vanadium, a compound of magnesium and optionally an electron donor compound and/or a particulate inorganic oxide as a support material.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

The process of the present disclosure is a polymerization process carried out in suspension. Such suspension polymerizations, which are also designated as slurry polymerizations, take place in a medium, the so-called suspension medium, which is in liquid or in supercritical state under the conditions in the respective polymerization reactor and in which the produced ethylene polymer is insoluble and forms solid particles. The solids content of the suspension is generally in the range of from 10 to 80 wt.%, preferably in the range of from 20 to 40 wt.%.

The suspension medium, which forms the liquid or supercritical phase of the suspension, commonly comprises as main component a diluent but also comprises further components like, for example, dissolved monomers or comonomers, dissolved cocatalysts or scavengers like aluminum alkyls, dissolved reaction auxiliaries like hydrogen or dissolved reaction products of the polymerization reaction like oligomers or waxes. Suitable diluents should be inert, i.e. should not decompose under reaction conditions. Such diluents are for example hydrocarbons having from 3 to 12 carbon atoms, and in particular saturated hydrocarbons like isobutane, butane, propane, isopentane, pentane, hexane or octane, or a mixture of these. In preferred embodiments, the diluent is a hydrocarbon mixture. For producing hydrocarbon mixtures from a raw material, a less high demand for separating the components of the raw material is needed than for producing a specific hydrocarbon, and accordingly hydrocarbon mixtures are economically more attractive as diluent, but show the same diluent performance as specific hydrocarbons. However, hydrocarbon mixtures may have a boiling point range.

The diluent preferably has a boiling point which is significantly different from those of the monomers and comonomers used in order to make it possible for these starting materials to be recovered from a mixture by distillation. Such diluents are for example hydrocarbons having a boiling point above 40°C or even above 60°C or mixtures comprising a high proportion of these hydrocarbons. Thus, in preferred embodiments of the present disclosure, the polymerization takes place in a liquid suspension medium comprising more than 50 wt.% of saturated hydrocarbons having a boiling point of above 60°C at 0.1 MPa or even comprising more than 80 wt.% of saturated hydrocarbons having a boiling point of above 60°C at 0.1 MPa.

The process of the present disclosure can be carried out using all industrially known suspension polymerization processes at temperatures in the range from 40 to 150°C, preferably from 50 to 130°C and particularly preferably from 60 to 90°C, and under pressures of from 0.1 to 20 MPa, preferably from 0.15 to 5 MPa and particularly preferably from 0.2 MPa to 2 MPa.

In preferred embodiments of the present disclosure, the polymerization is carried out in a series of at least two polymerization reactors which are connected in series. These reactors are not restricted to any specific design; preferably these reactors are however loop reactors or stirred tank reactors. There is no limit to the number of reactors of such a series, however preferably the series consist of two, three or four reactors and most preferably of two or three reactors. If a series of polymerization reactors is used in the process of the present disclosure, the polymerization conditions in the polymerization reactors can differ, for example by the nature and/or the amount of comonomers or by different concentrations of polymerization auxiliaries such as hydrogen. Preferably, the polymerization is a suspension polymerization in stirred tank reactors.

The ethylene polymers are usually obtained as powder, that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 50 to about 3000 µm. Preferred polyolefin powders have a mean particle diameter of from 100 to 250 µm. The particle size distribution can, for example, advantageously be determined by sieving. Suitable technics are e.g. vibrating sieve analysis or sieve analysis under an air jet.

The density of preferred ethylene polymers obtained by the process of the present disclosure is from 0.90 g/cm³ to 0.97 g/cm³. Preferably the density is in the range of from 0.920 to 0.968 g/cm³ and especially in the range of from 0.945 to 0.965 g/cm³. The density has to be understood as being the density determined according to DIN EN ISO 1183-1 :2004, Method A (Immersion) with compression molded plaques of 2 mm thickness which were pressed at 180°C, 20MPa for 8 minutes with subsequent crystallization in boiling water for 30 minutes.

In preferred embodiments, the polyethylenes prepared by the process of the present disclosure have a MFR_{21.6} at a temperature of 190°C under a load of 21.6 kg, determined according to DIN EN ISO 1133:2005, condition G, from 0.5 to 300 g/10 min, more preferably from 1 to 100 g/10 min, even more preferably of from 1.2 to 100 g/10 min and in particular from 1.5 to 50 g/10 min.

The ethylene polymers obtained by the process of the present disclosure can be mono-modal, bimodal or multimodal ethylene polymers. Preferably, the ethylene polymers are bimodal or multimodal ethylene polymers. The term "multimodal" hereby refers to the modality of the obtained ethylene copolymer and indicates that the ethylene copolymer comprises at least two fractions of polymer which are obtained under different reaction conditions, independently whether this modality can be recognized as separated maxima in a gel permeation chromatography (GPC) curve or not. The different polymerization conditions can, for example, be achieved by using different hydrogen concentrations and/or by using different comonomer concentrations in different polymerization reactors. Such polymers can be obtained from polymerizing olefins in a series of two or more polymerization reactors under different reaction conditions. It is however also possible to obtain such bimodal or multimodal polyolefins by employing mixed catalysts. In addition to the molecular weight distribution, the polyolefin can also have a comonomer distribution, wherein preferably the average comonomer content of polymer chains with a higher molecular weight is higher than the average comonomer content of polymer chains with a lower molecular weight. The term "multimodal" as used herein shall include also "bimodal".

In preferred embodiments of the process of the present disclosure, the polymerization is carried out in a series of polymerization reactors and an ethylene homopolymer, preferably a low molecular weight ethylene homopolymer, is prepared in the first polymerization reactor and an ethylene copolymer, preferably a high molecular weight ethylene copolymer is prepared in a subsequent polymerization reactor. To be able to prepare an ethylene homopolymer in the first polymerization reactor, no comonomer is fed to the first polymerization reactor, neither directly nor as component of a feed stream or a recycle stream which is introduced into the first polymerization reactor of the series of polymerization reactors. The so obtained multimodal ethylene copolymers preferably comprise from 35 to 65 % by weight of ethylene homopolymer prepared in the first polymerization reactor and from 35 to 65 % by weight of ethylene copolymer prepared in the subsequent polymerization reactor. If the series of polymerization reactors comprises one are more prepolymerization reactors, the prepolymerization is preferably carried without adding comonomers.

In other preferred embodiments of the present disclosure, the ethylene polymer is prepared in a series of three polymerization reactors, i.e. in a first polymerization reactor and two subsequent polymerization reactors, wherein the ethylene polymer prepared in the first polymerization reactor is an ethylene homopolymer, preferably a low molecular weight ethylene homopolymer, the polyethylene prepared in one of the subsequent polymerization reactors is an ethylene copolymer, preferably a high molecular weight copolymer, and the polyethylene prepared in the other subsequent polymerization reactor is an ethylene copolymer of a higher molecular weight, preferably an ultrahigh molecular weight copolymer. The so obtained multimodal ethylene copolymers preferably comprise from 30 to 60 % by weight, more preferably from 45 to 55 % by weight of ethylene homopolymer prepared in the first polymerization reactor, from 30 to 65 % by weight, more preferably from 20 to 40 % by weight of ethylene copolymer prepared in one subsequent polymerization reactor, and from 1 to 30 % by weight, more preferably from 15 to 30 % by weight of higher molecular weight ethylene copolymer prepared in the other subsequent polymerization reactor.

In the process of the present disclosure, the suspension of ethylene polymer formed in the polymerization reactor or the series of polymerization reactors is transferred into a solid-liquid separator, in which the ethylene polymer particles are separated from the suspension medium. This separation into ethylene polymer particles and mother liquor can be carried out in all suitable separation apparatuses such as centrifuges, decanters, filters or combinations thereof. Preferably, the solid-liquid separator is a centrifuge. In preferred embodiments of the present disclosure, the suspension withdrawn from the polymerization reactor or the series of polymerization reactors is first transferred into a separator feed vessel and then conveyed from the separator feed vessel to the solid-liquid separator.

The term "mother liquor" as used herein refers to the separated suspension medium obtained from the suspension in the solid-liquid separator. Typically, the mother liquor comprises more than 70 wt.% of diluent. Further components of the mother liquor include ethylene, comonomers, aluminum alkyls, hydrogen and dissolved reaction products like oligomers and waxes. The term "oligomer" as used herein refers to hydrocarbons which have a higher molecular weight than the diluent and the comonomer or the comonomers and which are liquid at standard pressure and room temperature. The term "wax" as used herein refers to hydrocarbons which are solved in the mother liquor at reactor temperature or below and which are, after evaporation of the diluent and the oligomers, solid at standard pressure and room temperature. In preferred embodiments, the mother liquor comprised from 75 to 99.5 wt.%, preferably from 80 to 99 wt.% diluent; from 0.5 to 20 wt.%, preferably from 1 to 10 wt.% oligomers; from 0 to 5 wt.%, preferably from 0.3 to 3 wt.% comonomer or comonomers; from 0 to 5 wt.%, preferably from 0.2 to 3 wt.% waxes, from 0 to 1 wt.%, preferably from 0.001 to 0.1 wt.% ethylene, from 0 to 0.1 wt.% hydrogen and from 0.1 to 2.5 mmol/l aluminum alkyls or reaction products of aluminum alkyls.

The ethylene polymer particles obtained in the solid-liquid separator usually still contain suspension medium, i.e. the ethylene polymer particles are "wet". The wet ethylene polymer particles typically contain from 10 wt.% to 40 wt.% and preferably from 15 wt.% to 35 wt.% of suspension medium, i.e. of mother liquor. In preferred embodiments of the process of the present disclosure, the separated ethylene polymer particles are dried by contacting the particles with a gas stream, thereby forming a gas stream carrying a hydrocarbon load. The drying can occur in any kind of suitable equipment in which a powder can be contacted, and preferably be countercurrently contacted with a gas stream for taking up suspension medium attached to or included in the ethylene polymer particles. Such powder dryers are preferably operated with hot nitrogen which is circulated in a closed loop. The drying is preferably carried out in a two-stage dryer in which residual suspension medium is stripped from the ethylene polymer particles in two subsequent stages. The dried ethylene polymer particles are preferably pneumatically conveyed to an extrusion section in which suitable amounts of additives are added and the mixture is molten, homogenized and pelletized. In preferred embodiments, the dried ethylene polymer particles coming from the powder dryer first pass a degassing unit and/or a powder treatment unit before being conveyed to the extrusion section.

Preferably, the hydrocarbon load taken up by the gas stream for drying the wet ethylene polymer particles is subsequently separated from the gas stream, thereby forming a liquid hydrocarbon recover stream. Such separation can, for example, occur by condensation. In preferred embodiments, the hydrocarbon load is separated from the gas stream in a scrubber into which a cooled liquid phase is introduced. In such an embodiment, the liquid phase which has taken up the hydrocarbon load from the gas stream coming from the dryer forms the liquid hydrocarbon recover stream. Preferably, the liquid hydrocarbon recover stream is withdrawn from the bottom of the scrubber and a part of this stream is returned to the scrubber as cooled liquid phase after having passed a cooler. Preferably, the gas stream coming from the dryer passes a particle removing equipment such as a filter or a cyclone before the hydrocarbon load is separated from the gas stream.

In preferred embodiments of the process of the present disclosure, most of the mother liquor is recycled to the polymerization reactor or the series of polymerization reactors. If the polymerization is carried out in a series of polymerization reactors, preferably all polymerization reactors of the series of polymerization reactors are provided with recycled parts of the mother liquor. Preferably, from 90 to 99.99 wt.%, more preferably from 95 to 99.5 wt.%, and in particular from 97 to 99 wt.% of the mother liquor are recycled to the polymerization reactor or the series of polymerization reactors. The parts of the mother liquor which are not recycled include, for example, continuous flushings of pumps, off-gas which may be vented to purge gaseous impurities of the feed streams or gaseous by-products of the polymerization process or dissolved reaction products like waxes which are intentionally removed from the mother liquor.

The mother liquor is preferably first fed to a mother liquor collecting vessel and, for being recycled to the polymerization process, the mother liquor is withdrawn from the mother liquor collecting vessel.

The mother liquor can be recycled to the polymerization reactor or the series of polymerization reactors as such, or the mother liquor can be recycled in worked-up form. In the process of the present disclosure, a part of the mother liquor is worked up in a work-up section for producing worked-up components of the mother liquor. Work-up in the context of the present disclosure means that a composition is separated in one or more separated compositions or that one or more components of a composition are removed from the composition and a purified composition void of or at least substantially depleted in the removed component(s) is obtained. A work-up can however even go so far that individual components of the composition are isolated. Such a work-up process can, for example, include removing components of the mother liquor, which have a significantly lower boiling point than the diluent, for example ethylene and/or 1 -butene, from the mother liquor, and/or removing components of the suspension medium, which have a significantly higher boiling point than the diluent, for example oligomers and/or waxes, from the mother liquor. The amount of mother liquor which passes the work-up section is preferably from 10 to 90 wt.%, more preferably from 20 to 80 wt.% and most preferably from 30 to 70 wt.% of the mother liquor recycled to the series of polymerization reactors. In preferred embodiments of the work-up process, the mother liquor is separated in two or more components which are recycled to the polymerization in individual recycle circuits. After the separation, each of the individual recycle circuits may comprise further purification steps. Components of the mother liquor, which may be recycled to the series of polymerization reactors in individual recycle circuits, can be, besides the diluent, ethylene and comonomers. The worked-up components of the mother liquor can be transferred to any polymerization reactor used for carrying out the polymerization of the present disclosure.

The work-up section for working up the mother liquor according to the present disclosure comprises an evaporation unit into which the part of the mother liquor to be worked up is transferred for producing a wax-depleted portion of the mother liquor. Preferably, the evaporation unit separates the mother liquor in lower boiling point components, which are withdrawn in gaseous form from the evaporation unit, and a wax containing, remaining part which is depleted in lower boiling point components. The evaporated part, which is withdrawn in gaseous form from the evaporation unit, represents the wax-depleted portion of the mother liquor. At least a part of this wax-depleted portion of the mother liquor is recycled to the polymerization reactor or the series of polymerization reactors.

According to the process of the present disclosure, a protic agent is added to the part of the mother liquor which is transferred into the work-up section. The protic agent employed in the process of the present disclosure can be any chemical compound which is able to donate protons to metal alkyl compounds and hence triggers the chemical decomposition of cocatalysts like aluminum alkyls or of the active sites of the olefin polymerization catalysts. Preferably, the protic agent is water, an alcohol, an acid or a mixture thereof. Water can be added in liquid form, as steam or as aqueous solution of any type of organic or inorganic compound, preferably water is added in liquid form or as steam. Suitable alcohols include all types of monovalent or polyvalent alcohols. Preferred alcohols for being used as protic agents are n-hexanol, n-heptanol, n-octanol, n-nonanol, n-decanol, n-undecanol, n-dodecanol, glycerin or glycols or their mixtures. Suitable acids include all types of organic or inorganic acids. Most preferably the protic agent is water which is added as water or steam. In preferred embodiments, the protic agent is added in an amount which is in a range from a stochiometric amount of protic agent with respect to the content of cocatalyst and other components of the olefin polymerization catalyst system in the mother liquor to be worked-up to ten times the stochiometric amount of protic agent with respect to the content of cocatalyst and other components of the olefin polymerization catalyst system in the mother liquor to be worked-up. In especially preferred embodiments, the protic agent is added in an amount which is in a range from 1.5 times the stochiometric amount of protic agent with respect to the content of cocatalyst and other components of the olefin polymerization catalyst system in the mother liquor to be worked-up to three times the stochiometric amount of protic agent with respect to the content of cocatalyst and other components of the olefin polymerization catalyst system in the mother liquor to be worked-up.

The protic agent is preferably added in a ratio of from 10 g to 10000 g protic agent per ton of mother liquor, more preferably from 20 g to 5000 g protic agent per ton of mother liquor, most preferably from 30 g to 3000 g protic agent per ton of mother liquor and in particular from 50 g to 1000 g protic agent per ton of mother liquor. In most preferred embodiments in which the protic agent is water, water is added in a ratio of 10 g to 2500 g water per ton of mother liquor, more preferably from 20 g to 1500 g water per ton of mother liquor and most preferably from 30 g to 500 g water per ton of mother liquor.

The protic agent can be added at any position between the evaporation unit and the point, where the part of the mother liquor to be worked-up is separated from the mother liquor which is recycled to the polymerization reactor or the series of polymerization reactors as such. It is possible to add the protic agent at one or more positions to the mother liquor to be worked up. Preferably, the protic agent is added at one position.

In preferred embodiments of the present disclosure, the mixture of mother liquor and added protic agent to be transferred into the work-up section passes a mixing device before entering the work-up section in order to intensify the mixing of mother liquor and protic agent. Preferably, the mixing device is an inline mixer such as a static mixer or flow mixer or line mixer or pipe mixer, a jet mixer, mixing nozzles, a hydrocyclone, a vessel equipped with a mixing element (static or rotating), a rotor/stator mixer or a homogenizer or an emulsifier. Most preferably, the mixing device is a static mixer. Preferably, the mixing device is installed directly downstream of the position at which the protic agent is added to the mother liquor. If the protic agent is added to the mother liquor at more than one position, preferably a mixing device is installed downstream of each of the positions at which protic agent is added to the mother liquor.

In preferred embodiments of the present disclosure, a heat exchanger operating as pre-heater is installed as a first element of the work-up section upstream of the evaporation unit, and the mixture of mother liquor and protic agent transferred into the work-up section is passed through this heat exchanger before entering the evaporation unit. Installing a pre-heater upstream of the evaporation unit allows to heat up the mother liquor to nearly evaporation conditions in order to save energy in the evaporation unit.

The evaporation unit used in the process of the present disclosure is preferably a circulating evaporation unit comprising a heat exchanger and a separation vessel. The circulating evaporation unit is preferably operated by feeding the liquid phase to be evaporated into the heat exchanger, partly vaporizing the liquid phase in the heat exchanger, and returning the resulting liquid and vapor mixture to the separation vessel.

By adding a protic agent to the mother liquor to be worked up, fouling within the heat exchanger or heat exchangers to heat up the mother liquor, such as the heat exchanger in a circulating evaporation unit or the heat exchanger being installed as pre-heater upstream of the evaporation unit, can be prevented or at least drastically reduced. In the opinion of the present inventors, this fouling might result from residues of catalyst and/or cocatalyst in the mother liquor which are still active and may perform polymerization or crosslinking reactions with traces of monomer or comonomer also still present in the mother liquor and/or by the formation of deposits when cocatalyst or catalyst come in contact with hot surfaces of the heat exchangers. By adding a protic agent, such active species are deactivated and fouling is eliminated or at least significantly reduced.

In preferred embodiments of the present disclosure, the evaporated part of the mother liquor withdrawn from the evaporation unit is subsequently condensed and transferred to a diluent distillation unit, which produces isolated diluent from the wax-depleted portion of the mother liquor. In the diluent distillation unit, preferably lower boiling point components of the mother liquor are separated from the diluent by a distillation step. Typically, lower boiling point components are ethylene, hydrogen, those comonomers, which have a lower or a similar boiling point than the used diluent, and parts of the diluent. This means, when, for example, n-hexane or a mixture of hexane isomers is used as diluent and 1-butene is used as comonomer, the majority of the 1-butene comprised in the mother liquor forms a part of the lower boiling point components separated from the diluent in the diluent distillation unit. Preferably, most of the lower boiling point components of the mother liquor are recycled to the polymerizations in individual recycle circuits, most preferably after having passed one or more further work-up steps. It is also possible to separate higher boiling point components of the mother liquor from the diluent by a distillation step. Such higher boiling point components can be comonomers, which have a boiling point similar to or higher than that of the used diluent. Preferably, most of the higher boiling point components obtained by the distillation are recycled to the polymerizations, most preferably after having passed one or more further work-up steps.

The isolated diluent produced within the diluent distillation unit is preferably at least partly recycled to the polymerization reactor or the series of polymerization reactors. In preferred embodiments of the present disclosure, the isolated diluent is recycled to a polymerization reactor in which an ethylene homopolymer is prepared.

Preferably, from 5 to 70 wt.% of the mother liquor, which is recycled to the polymerization reactor or the series of polymerization reactors, are recycled as isolated diluent to the polymerization reactor or the series of polymerization reactors, more preferably from 7.5 to 60 wt.% and in particular from 10 to 50 wt.% of the mother liquor are recycled as isolated diluent to the polymerization reactor or the series of polymerization reactors.

In preferred embodiments of the present disclosure, the isolated diluent passes one or more purification steps, thereby obtaining a purified diluent, before being recycled to the polymerization reactor or the series of polymerization reactors. These diluent purification steps can be, for example, a purification by adsorption, a purification by absorption, a catalytic hydrogenation, or a purification by a membrane purification process.

In preferred embodiments of the present disclosure, the wax containing part of the mother liquor depleted in lower boiling point components, which is obtained in the evaporation unit, is transferred to a wax removal unit for removing wax from this part of the mother liquor. Wax withdrawn from the polymerization process in the wax removal unit may be combusted for generating energy or may be sold as by-product of the polymerization process.

In preferred embodiments of the present disclosure, the wax removal unit is operated by direct steam distillation, i.e. by injecting steam directly into a vessel comprising a hydrocarbon wax solution from which wax is removed. By injecting steam, a gaseous hydrocarbon/steam mixture, which comprises primarily diluent and steam, is generated in the wax removal unit.

In case of using acids or higher alcohols as protic agents, those protic agents or their reaction products may leave the process together with the wax or the waste water.

Preferably, the gaseous hydrocarbon/steam mixture obtained in the wax removal unit is withdrawn from the wax removal unit, condensed and transferred into a liquid-liquid separator, in which the mixture is separated in an aqueous phase and a hydrocarbon phase. The aqueous phase obtained in the liquid-liquid separator is preferably discarded. The hydrocarbon phase obtained in the liquid-liquid separator may be recycled to a stage of the mother liquor work-up process upstream of the evaporation unit for producing the wax-depleted portion of the mother liquor, for example by adding to the mother liquor transferred into the work-up section.

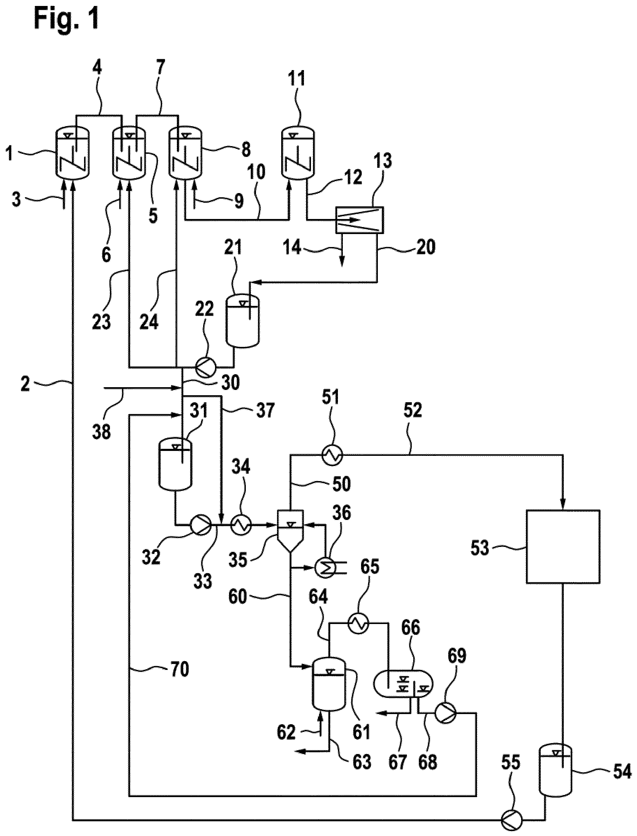

Figure 1 shows schematically a set-up for preparing multimodal ethylene polymers in a series of three polymerization reactors by a suspension polymerization process using hexane as diluent.

For homopolymerizing ethylene or copolymerizing ethylene with other olefins in a first polymerization reactor (1) in suspension, recycled hexane is fed to the reactor (1) via feeding line (2). The other components of the reaction mixture like catalyst, ethylene and polymerization auxiliaries and optional components like possible comonomers and/or directly recycled mother liquor are fed to the reactor via one or more feeding lines (3).

As result of the polymerization in reactor (1), a suspension of solid ethylene polymer particles in a suspension medium is formed. This suspension is fed via line (4) to the second polymerization reactor (5) where further polymerization occurs. Fresh comonomer or further components of the reaction mixture can be fed to reactor (5) via one or more feeding lines (6). Directly recycled mother liquor can be fed to reactor (5) via line (23).

The suspension of reactor (5) is thereafter fed via line (7) to the third polymerization reactor (8) in which additional polymerization is carried out. One or more feeding lines (9) allow supplementary feeding of comonomer or further components of the reaction mixture to reactor (8). Within polymerization reactor (8), further polymerization occurs. Directly recycled mother liquor can be fed to reactor (8) via line (24).

The suspension of ethylene polymer particles in the suspension medium formed in reactor (8) is continuously transferred via line (10) to separator feed vessel (11). The suspension is then passed via line (12) to centrifuge (13), in which the suspension is separated in solid ethylene polymer particles and mother liquor, i.e. recovered liquid suspension medium. The isolated, still wet ethylene polymer particles are discharged from centrifuge (13) via line (14).

The mother liquor obtained in centrifuge (13) is transferred via line (20) to a mother liquor collecting vessel (21). From there, mother liquor can be recycled by means of pump (22) via lines (23) and (24) to polymerization reactor (5) and/or polymerization reactor (8).

For work-up, mother liquor is branched-off line (23) and transferred via line (30) to mother liquor tank (31). From there, mother liquor is transferred by means of pump (32) via line (33) through heat exchanger (34) to an evaporation unit (35, 36). Evaporation unit (35, 36) is designed as circulating evaporation unit which is operated by circulating the liquid phase to be evaporated through heat exchanger (36), in which the liquid phase is partly vaporized. The heat exchanger (36) is connected to a separation vessel (35) in which the entering liquid and vapor mixture is separated. Heat exchanger (34) acts as pre-heater in which the mother liquor is heated up to nearly evaporation conditions in order to save energy in the evaporation unit (35, 36).

Line (37) which branches off line (30) allows to feed mother liquor directly from mother liquor collecting vessel (21) to heat exchanger (34) and evaporation unit (35, 36) without passing through mother liquor tank (31). A protic agent is fed via line (38) into line (30) at a position upstream of the branch-off point of line (30). In different embodiments of the process of the present disclosure, it is also possible to add the protic agent at a position upstream or downstream of mother liquor tank (31), or at a position upstream or downstream of pump (32), or into line (37).

The vaporized fractions of the mother liquor are withdrawn from the top of separation vessel (35) via line (50), condensed in heat exchanger (51) and transferred via line (52) into a distillation and purification unit (53), in which purified hexane is generated from the vaporized fractions of the mother liquor. Purified hexane obtained in the distillation and purification unit (53) is transferred into a hexane tank (54) and, from there, recycled by means of pump (55) via line (2) as diluent to polymerization reactor (1).

A liquid phase enriched in higher boiling point fractions of the mother liquor is withdrawn from the bottom of separation vessel (35) via line (60) and transferred to a wax separation unit (61, 62, 63), which is operated by injecting steam via line (62) directly into a wax separator vessel (61). Liquid wax may be withdrawn from the bottom of wax separator vessel (61) via line (63) and conveyed to an incineration unit (not shown), e.g. for generation of steam, or to a solidifying unit or liquid shipping unit (not shown) for being sold.

In an embodiment designated to directly obtain solidified wax, the set-up for preparing the multimodal ethylene polymers includes two wax separation units (61, 62, 63; only one is depicted in Figure 1) which are arranged in parallel and alternately supplied with the liquid phase coming from the bottom of the separation vessel (35). After switching the supply of the liquid phase coming from the bottom of the separation vessel (35) to the other, non-depicted wax separation unit, the liquid wax in wax separator vessel (61) is cooled down by feeding cold water into wax separator vessel (61). An agitator (not shown) within the wax separator vessel (61) is preventing the liquid wax to solidify as a big wax block and small wax chunks are formed. These wax chunks are then discharged from wax separator vessel (61) via line (63) into big bags or any other containers (not shown), preferably for being sold.

The gaseous fractions obtained in wax separator vessel (61), which comprise primarily hexane and water, are withdrawn from the top of wax separator vessel (61) via line (64), condensed in heat exchanger (65) and transferred into a liquid-liquid separation vessel (66). Water is withdrawn from the liquid-liquid separation vessel (66) via line (67) and transferred to a waste water system (not shown). The hexane phase is withdrawn from the liquid-liquid separation vessel (66) via line (68) and transferred by means of pump (69) via line (70) to mother liquor tank (31).

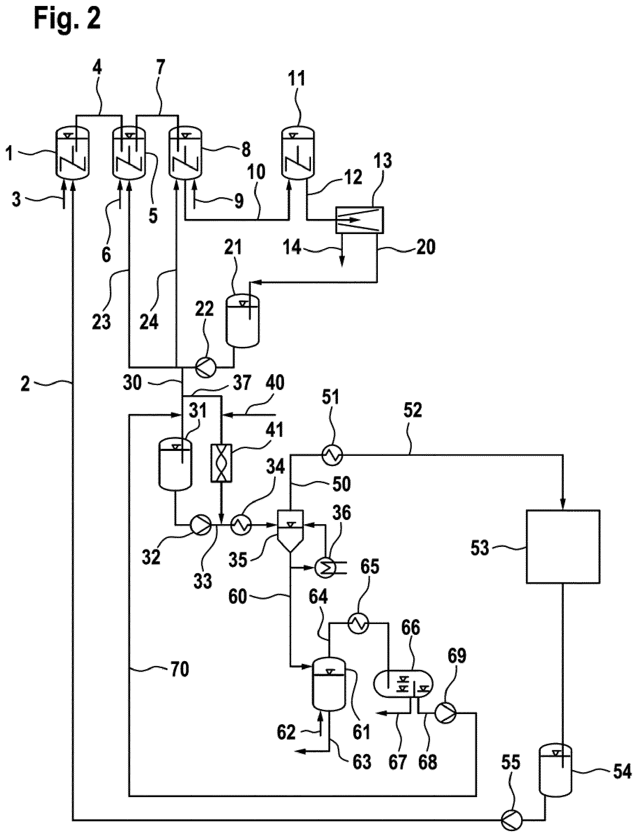

Figure 2 shows schematically a further set-up for preparing ethylene polymers in suspension according to the process of the present disclosure.

The process shown in Figure 2 is identical with the process in depicted Figure 1 except that the protic agent is not added to line (30) but fed via line (40) to line (37) and a static mixer (41) is installed downstream of the position where the protic agent is introduced into line (37).

The process of the present disclosure allows in an economical and energy efficient manner to work up the mother liquor, which is obtained by removing the prepared ethylene polymer particles from a suspension obtained in a suspension polymerization process for preparing ethylene polymers. Fouling in heat exchangers for heating the mother liquor, such as heat exchangers in circulating evaporation units or heat exchangers being installed as pre-heaters upstream of the evaporation unit, is prevented or at least significantly reduced. Frequent cleaning of these heat exchangers is avoided. Reducing the cleaning frequency in not only a cost saving for the cleaning process itself but also reduces the downtime of the whole polymerization plant which is an enormous economic benefit.

### EXAMPLES

### Comparative Example A

Polyethylene was continuously prepared in a commercially operated reactor system comprising three polymerization reactors as shown in Figure 1, except that no protic agent was added via line (38). For a period of more than five years, polymerization of ethylene and optionally 1-butene as comonomer was carried out in the presence of Ziegler-type catalysts at reactor temperatures in the range from 65°C to 85°C and reactor pressures of from 0.2 MPa to 1.3 MPa preparing a variety of different polyethylene grades. Depending on the grades, the production rate varied in the range from 30 to 41 t/h. The amount of mother liquor withdrawn from centrifuge (13) and transferred via line (20) to mother liquor collecting vessel (21) was always in the range from 95 to 185 t/h. The mother liquor to be worked up was branched-off line (23) and passed through lines (30) and (37) to pre-heater (34). The amount of mother liquor which was worked up was in the range from 30 to 55 t/h. The amount of hexane phase withdrawn from liquid-liquid separation vessel (66) and transferred via line (70) to mother liquor tank (31) was in the range from 3 to 7 t/h.

During polymerization, the heat transfer in pre-heater (34) and in heat exchanger (36) was declining quite significantly and also quite fast. In average, the performance loss of pre-heater (34) was more than 50% in a period of 4 to 8 weeks. For heat exchanger (36), a performance loss of more than 30% occurred in a period of 10 to 26 weeks. It was accordingly necessary to clean pre-heater (34) every 6 to 12 weeks and to clean heat exchanger (36) every three to six months to maintain a sufficient heat transfer performance of the heat exchangers and to have in consequence a sufficient mother liquor work-up capacity.

### Example 1

The polymerization of Comparative Example A was repeated, however line (37) was permanently closed and the whole amount of the mother liquor to be worked up was transferred via line (30) into mother liquor tank (31). Water was added as protic agent via line (38) as shown in Figure 1 in an amount of 250 g water per ton of mother liquor which passed through line (30) into mother liquor tank (31).

During a period of five years, polymerizations of ethylene and optionally 1-butene as comonomer were carried out in the presence of Ziegler-type catalysts at reactor temperatures in the range from 65°C to 85°C and reactor pressures of from 0.2 MPa to 1.3 MPa preparing a variety of different polyethylene grades very similar to the polyethylene grades prepared in Comparative Example A.

Pre-heater (34) was operated without any cleaning for the whole five years. Heat exchanger (36) was cleaned once after 12 months during a regular maintenance shutdown as a preventive measure. No additional cleaning of heat exchanger (36) was necessary within the five years. Inspection of the mother liquor tank (31) after five years showed a sediment within mother liquor tank (31) requiring cleaning of mother liquor tank (31).

### Example 2

The polymerization of Comparative Example A was repeated, however water was added as protic agent via line (40) as shown in Figure 2 in an amount of 250 g water per ton of mother liquor which passed through line (37).

During a period of two years, polymerizations of ethylene and optionally 1-butene as comonomer were carried out in the presence of Ziegler-type catalysts at reactor temperatures in the range from 65°C to 85°C and reactor pressures of from 0.2 MPa to 1.3 MPa preparing a variety of different polyethylene grades very similar to the polyethylene grades prepared in Comparative Example A.

Pre-heater (34) was operated without any cleaning for the whole two years. Heat exchanger (36) was cleaned once after 12 months during a regular maintenance shutdown as a preventive measure. No additional cleaning of heat exchanger (36) was necessary within the two years. Inspection of the mother liquor tank (31) after two years gave that no sediment had formed within mother liquor tank (31).

### Example 3

The polymerization of Example 2 was repeated, however LINEVOL 911, a mixture of n-nonanol, n-decanol and n-undecanol (commercially available from Shell Chemicals) was added as protic agent via line (40) as shown in Figure 2 in an amount of 750 g LINEVOL 911 per ton of mother liquor which passed through line (37).

During a period of two years, polymerizations of ethylene and optionally 1-butene as comonomer were carried out in the presence of Ziegler-type catalysts at reactor temperatures in the range from 65°C to 85°C and reactor pressures of from 0.2 MPa to 1.3 MPa preparing a variety of different polyethylene grades very similar to the polyethylene grades prepared in Example 2.

Pre-heater (34) was operated without any cleaning for the whole two years. Heat exchanger (36) was cleaned once after 12 months during a regular maintenance shutdown as a preventive measure. No additional cleaning of heat exchanger (36) was necessary within the two years. Inspection of the mother liquor tank (31) after two years gave that no sediment had formed within mother liquor tank (31).

By adding water or LINEVOL 911 to the mother liquor to be worked-up upstream of heat exchanger (34) and evaporation unit (35, 36), the cleaning frequencies for the heat exchangers (34) and (36) were drastically reduced. It could be avoided to clean the heat exchangers outside of a regular maintenance shutdown, thus avoiding any production loss caused by heat exchanger fouling in the mother liquor work-up section.

## Claims

1. A process for preparing an ethylene polymer in a suspension polymerization in a polymerization reactor or a series of polymerization reactors comprising
polymerizing ethylene or copolymerizing ethylene and one or more C₃-C₁₂-1-alkenes at temperatures of from 40 to 150°C and pressures of from 0.1 to 20 MPa in the presence of a polymerization catalyst and forming a suspension of ethylene polymer particles in a suspension medium comprising a hydrocarbon diluent,
transferring the suspension of ethylene polymer particles into a solid-liquid separator, in which the suspension is separated in ethylene polymer particles and mother liquor,
transferring a part of the mother liquor into a work-up section comprising an evaporation unit for producing a wax-depleted portion of the mother liquor, wherein a protic agent is added to the part of the mother liquor which is transferred into the work-up section, and
recycling at least a part of the wax-depleted portion of the mother liquor to the polymerization reactor or the series of polymerization reactors.

2. The process of claim 1, wherein the protic agent is water, an alcohol, an acid or a mixture thereof.

3. The process of claim 2, wherein the protic agent is water and the water is added in liquid form, as steam or as aqueous solution of an organic or inorganic compound.

4. The process of any of claims 1 to 3, wherein the mixture of mother liquor and added protic agent to be transferred into the work-up section passes a mixing device before entering the work-up section.

5. The process of claim 4, wherein the mixing device is an inline mixer, a jet mixer, mixing nozzles, a hydrocyclone, a vessel equipped with a mixing element, a rotor/stator mixer or a homogenizer or an emulsifier.

6. The process of any of claims 1 to 5, wherein a heat exchanger operating as pre-heater is installed upstream of the evaporation unit and the mixture of mother liquor and added protic agent transferred into the work-up section is passed through this heat exchanger before entering the evaporation unit.

7. The process of any of claims 1 to 6, wherein the evaporation unit is a circulating evaporation unit comprising a heat exchanger and a separation vessel and the circulating evaporation unit is operated by feeding the liquid phase to be evaporated into the heat exchanger, partly vaporizing the liquid phase in the heat exchanger, and returning the resulting liquid and vapor mixture to the separation vessel.

8. The process of any of claims 1 to 7, wherein the wax-depleted portion of the mother liquor produced in the evaporation unit is further subjected to a distillation process before being recycled to the polymerization reactor or the series of polymerization reactors.

9. The process of any of claims 1 to 8, wherein a wax containing part of the mother liquor depleted in lower boiling point components is withdrawn from the evaporation unit and transferred to a wax removal unit which is operated by direct steam distillation.

10. The process of claim 9, wherein the wax removal unit produces a gaseous hydrocarbon/steam mixture which is condensed and then separated, within a liquid-liquid separator, into an aqueous phase and a hydrocarbon phase and the hydrocarbon phase is recycled to the evaporation unit.

11. The process of any of claims 1 to 10, wherein the prepared ethylene polymer is a multimodal ethylene copolymer.

12. The process of claim 11, wherein the preparation of the ethylene polymer is carried out in a series of polymerization reactors and an ethylene homopolymer is prepared in one of the polymerization reactors.

13. The process of claim 12, wherein the ethylene homopolymer is prepared in the first polymerization reactor of the series of polymerization reactors and a copolymer of ethylene is prepared in a subsequent polymerization reactor.

## Patentansprüche

1. Verfahren zur Herstellung eines Ethylenpolymers in einer Suspensionspolymerisation in einem Polymerisationsreaktor oder einer Reihe von Polymerisationsreaktoren, umfassend
Polymerisieren von Ethylen oder Copolymerisieren von Ethylen und einem oder mehreren C₃-C₁₂-1-Alkenen bei Temperaturen von 40 bis 150 °C und Drücken von 0,1 bis 20 MPa in Gegenwart eines Polymerisationskatalysators und Bilden einer Suspension von Ethylenpolymerpartikeln in einem Suspensionsmedium, umfassend ein Kohlenwasserstoffverdünnungsmittel,
Überführen der Suspension von Ethylenpolymerpartikeln in einen Fest/Flüssig-Separator, in dem die Suspension in Ethylenpolymerpartikel und Mutterlauge getrennt wird,
Überführen eines Teils der Mutterlauge in einen Aufarbeitungsabschnitt, umfassend eine Verdampfereinheit, um einen wachsabgereicherten Anteil der Mutterlauge zu produzieren, wobei dem Teil der Mutterlauge, der in den Aufarbeitungsabschnitt überführt wird, ein protisches Mittel zugefügt wird, und
Recyceln von mindestens einem Teil des wachsabgereicherten Anteils der Mutterlauge in den Polymerisationsreaktor oder die Reihe von Polymerisationsreaktoren.

2. Verfahren nach Anspruch 1, wobei das protische Mittel Wasser, ein Alkohol, eine Säure oder eine Mischung davon ist.

3. Verfahren nach Anspruch 2, wobei das protische Mittel Wasser ist und das Wasser in flüssiger Form, als Wasserdampf oder als wässrige Lösung einer organischen oder anorganischen Verbindung zugefügt wird.

4. Verfahren nach einem der Ansprüche 1 bis 3, wobei die Mischung aus Mutterlauge und zugefügtem protischem Mittel, die in den Aufarbeitungsabschnitt überführt werden soll, eine Mischvorrichtung durchläuft, bevor sie in den Aufarbeitungsabschnitt eintritt.

5. Verfahren nach Anspruch 4, wobei die Mischvorrichtung ein Inline-Mischer, ein Strahlmischer, Mischdüsen, ein Hydrozyklon, ein mit einem Mischelement ausgestattetes Gefäß, ein Rotor/Stator-Mischer oder ein Homogenisierer oder ein Emulgator ist.

6. Verfahren nach einem der Ansprüche 1 bis 5, wobei ein Wärmetauscher, der als Vorheizer arbeitet, stromaufwärts von der Verdampfereinheit installiert wird und die Mischung aus Mutterlauge und zugefügtem protischem Mittel, die in den Aufarbeitungsabschnitt überführt wird, diesen Wärmetauscher durchlaufen gelassen wird, bevor sie in die Verdampfereinheit eintritt.

7. Verfahren nach einem der Ansprüche 1 bis 6, wobei die Verdampfereinheit eine Umlaufverdampfereinheit ist, die einen Wärmetauscher und ein Trenngefäß umfasst, und die Umlaufverdampfereinheit betrieben wird, indem die zu verdampfende flüssige Phase in den Wärmetauscher eingespeist wird, die flüssige Phase in dem Wärmetauscher teilweise verdampft wird und die resultierende Mischung aus Flüssigkeit und Dampf in das Trenngefäß zurückgegeben wird.

8. Verfahren nach einem der Ansprüche 1 bis 7, wobei der wachsabgereicherte Anteil der Mutterlauge, der in der Verdampfereinheit produziert wird, des Weiteren einem Destillationsverfahren unterzogen wird, bevor er in den Polymerisationsreaktor oder die Reihe von Polymerisationsreaktoren recycelt wird.

9. Verfahren nach einem der Ansprüche 1 bis 8, wobei ein wachshaltiger Teil der Mutterlauge, der an Komponenten mit niedrigerem Siedepunkt verarmt ist, aus der Verdampfereinheit abgezogen und in eine Wachsentfernungseinheit überführt wird, die durch direkte Wasserdampfdestillation betrieben wird.

10. Verfahren nach Anspruch 9, wobei die Wachsentfernungseinheit eine gasförmige Kohlenwasserstoff-/Wasserdampfmischung produziert, die kondensiert und dann innerhalb eines Flüssig-Flüssig-Separators in eine wässrige Phase und eine Kohlenwasserstoffphase getrennt wird, und wobei die Kohlenwasserstoffphase in die Verdampfereinheit recycelt wird.

11. Verfahren nach einem der Ansprüche 1 bis 10, wobei das hergestellte Ethylenpolymer ein multimodales Ethylencopolymer ist.

12. Verfahren nach Anspruch 11, wobei die Herstellung des Ethylenpolymers in einer Reihe von Polymerisationsreaktoren durchgeführt wird und in einem der Polymerisationsreaktoren ein Ethylenhomopolymer hergestellt wird.

13. Verfahren nach Anspruch 12, wobei das Ethylenhomopolymer in dem ersten Polymerisationsreaktor der Reihe von Polymerisationsreaktoren hergestellt wird und ein Copolymer von Ethylen in einem nachfolgenden Polymerisationsreaktor hergestellt wird.

## Revendications

1. Procédé de préparation d'un polymère d'éthylène dans une polymérisation en suspension dans un réacteur de polymérisation ou dans une série de réacteurs de polymérisation comprenant
la polymérisation d'éthylène ou la copolymérisation d'éthylène et d'un ou de plusieurs 1-alcènes en C₃-C₁₂ à des températures de 40 à 150 °C et à des pressions de 0,1 à 20 MPa en présence d'un catalyseur de polymérisation et la formation d'une suspension de particules de polymère d'éthylène dans un milieu de suspension comprenant un diluant hydrocarboné,
le transfert de la suspension de particules de polymère d'éthylène dans un séparateur solide-liquide, dans lequel la suspension est séparée en particules de polymère d'éthylène et en liqueur mère,
le transfert d'une partie de la liqueur mère dans une section de traitement final comprenant une unité d'évaporation destinée à produire une portion appauvrie en cire de la liqueur mère, un agent protique étant ajouté à la partie de liqueur mère qui est transférée dans la section de traitement final et
le recyclage d'au moins une partie de la portion appauvrie en cire de la liqueur mère dans le réacteur de polymérisation ou dans la série de réacteurs de polymérisation.

2. Procédé selon la revendication 1, l'agent protique étant de l'eau, un alcool, un acide ou un mélange de ceux-ci.

3. Procédé selon la revendication 2, l'agent protique étant de l'eau et l'eau étant ajoutée sous forme de liquide, de vapeur ou de solution aqueuse d'un composé organique ou inorganique.

4. Procédé selon l'une quelconque des revendications 1 à 3, le mélange de liqueur mère et d'agent protique ajouté à transférer dans la section de traitement final passant à travers un dispositif de mélange avant d'entrer dans la section de traitement final.

5. Procédé selon la revendication 4, le dispositif de mélange étant un mélangeur en ligne, un mélangeur à jets, des buses de mélange, un hydrocyclone, une cuve équipée d'un élément de mélange, un mélangeur à rotor/stator ou un homogénéisateur ou un dispositif d'émulsification.

6. Procédé selon l'une quelconque des revendications 1 à 5, un échangeur de chaleur fonctionnant comme dispositif de préchauffage étant installé en amont de l'unité d'évaporation et le mélange de liqueur mère et d'agent protique ajouté transféré dans la section de traitement final étant guidé à travers cet échangeur de chaleur avant d'entrer dans l'unité d'évaporation.

7. Procédé selon l'une quelconque des revendications 1 à 6, l'unité d'évaporation étant une unité d'évaporation à circulation comprenant un échangeur de chaleur et une cuve de séparation et l'unité d'évaporation à circulation fonctionnant par alimentation de la phase liquide à évaporer dans l'échangeur de chaleur, évaporation partielle de la phase liquide dans l'échangeur de chaleur et retour du mélange de liquide et de vapeur obtenu vers la cuve de séparation.

8. Procédé selon l'une quelconque des revendications 1 à 7, la portion appauvrie en cire de la liqueur mère produite dans l'unité d'évaporation étant en outre soumise à un procédé de distillation avant d'être recyclée dans le réacteur de polymérisation ou dans la série de réacteurs de polymérisation.

9. Procédé selon l'une quelconque des revendications 1 à 8, une partie contenant de la cire de la liqueur mère appauvrie en constituants à bas point d'évaporation étant soutirée de l'unité d'évaporation et transférée à une unité d'élimination de cire qui fonctionne par distillation directe à la vapeur.

10. Procédé selon la revendications 9, l'unité d'élimination de cire produisant un mélange gazeux hydrocarbure/vapeur qui est condensé puis séparé, dans un séparateur liquide-liquide, en une phase aqueuse et une phase hydrocarbonée et la phase hydrocarbonée étant recyclée dans l'unité d'évaporation.

11. Procédé selon l'une quelconque des revendications 1 à 10, le polymère d'éthylène préparé étant un copolymère d'éthylène multimodal.

12. Procédé selon la revendication 11, la préparation du polymère d'éthylène étant effectuée dans une série de réacteurs de polymérisation et un homopolymère d'éthylène étant préparé dans l'un des réacteurs de polymérisation.

13. Procédé selon la revendication 12, l'homopolymère d'éthylène étant préparé dans le premier réacteur de polymérisation de la série de réacteurs de polymérisation et un copolymère d'éthylène étant préparé dans un réacteur de polymérisation ultérieur.
